(19)

Europäisches
Patentamt
European
Patent Office
Office européen
des brevets

(11) **EP 2 045 463 A1**

(12) **EUROPEAN PATENT APPLICATION**
published in accordance with Art. 153(4) EPC

(43) Date of publication:
**08.04.2009 Bulletin 2009/15**

(21) Application number: **06813166.3**

(22) Date of filing: **13.09.2006**

(51) Int Cl.:
*F03D 1/02* (2006.01)

(86) International application number:
**PCT/UA2006/000051**

(87) International publication number:
**WO 2008/008049 (17.01.2008 Gazette 2008/03)**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(30) Priority: **10.07.2006 UA 2006007729**

(71) Applicant: **Project, Design And Technological
Bureau Concord Ltd.
Dnepropetrovsk 49069 (UA)**

(72) Inventors:
• **GOLUBENKO, Mykola Stepanovich
Dnepropetrovsk, 49008 (UA)**

• **DOVGOLYUK, Sergiy Ivanovich
Dnepropetrovsk, 49000 (UA)**
• **KADATSKIY, Alexander Leonidovich
Dnepropetrovsk, 49099 (UA)**
• **KURDYUKOV, Sergiy Dmitrievitch
Dnepropetrovsk, 49089 (UA)**
• **FELDMAN Alexander Mikhailovich
Dnepropetrovsk, 49089 (UA)**
• **TSYGANOV Valeriy Alexandrovich
Dnepropetrovsk, 49099 (UA)**

(74) Representative: **Jeck, Anton
Jeck - Fleck - Herrmann
Klingengasse 2
71665 Vaihingen/Enz (DE)**

(54) **WIND POWER PLANT**

(57)    The invention relates to wind power engineering
and can be used for high-power windpower turbine gen-
erators. The windpnwer turbine generator of the invention
comprises a rotatable head, which is mounted on a fixed
support and is provided with a main rotor having a hori-
zontal axis of rotation, a power converter in the form of
generators, which are mounted on the blades of the main
rotor and are provided with a cable system, and second-
ary rotors electrically connected to respective genera-
tors. The blades of the main rotor are provided with end
sections, which are embodied in such a way that they
are rotatable around the longitudinal axis, the generators
are mounted on the fixed end sections of the blades, the
secondary rotors are positioned towards air flow at a dis-
tance of 0.25- 0.35 of the diameter of the main rotor from
the axis of rotation and the axes of rotation thereof are
deviated with respect to a plane perpendicular to the axis
of rotation of the main rotor at an angle of y =(0.7-1.0)
arctg ($V_{nom}$ /∞L) degrees, wherein $V_{nom}$ is a nominal
speed of air flow, L is a distance from the axis of rotation
of the main rotor to the axis of rotation of the secondary
rotor and ∞ is the rotary speed of the main rotor at the
nominal speed of air flow. Said invention makes it pos-
sible to simplify the structural design for the plant and to
reduce the weight of the rotatable parts.

Fig. 2

**Description**

The invention relates to windpower power engineering and is designed for applications in high power windpower turbine generators.

Present windpower turbine generators of the propeller type with capacities of more than 500 kW intended for generating electric power require the use of an overgear between a rotor and an electric generator. They use overgears based on reduction units (step-up gearings) having transmission ratios between 50 and 150 for generators with rotor rotary speeds of 1200 - 1500 rpm at rotor rotary speeds of 10 rpm. Such gears have high cost, require frequent maintenance and essentially reduce overall efficiency (coefficient of efficiency) of a windpower turbine generator and its operating life.

A windpower turbine generator is known (International Application PCT/UA94/00023, publication No. W095/21326 of 08/10/95), comprising a rotatable head having a rotor generator with a cable network, the rotation axis of the rotor being located horizontally and the rotor being connected with the generator by means of step-up gearing in such a way that the rotor and the stator of the generator are rotated in opposite directions. This allows using high-speed and correspondingly more lightweight and inexpensive electric generators. In spite of the achieved possibility of using a generator with twice the higher speed, the presence of the step-up gearing causes such disadvantages as a decrease of windpower turbine generator reliability and its overall efficiency, and also an increase of the windpower turbine generator cost and its maintenance costs.

A windpower turbine generator (USP 5,151,610, F03D1/00, date of publication 09/29/92) is known, comprising generators, a main rotor having a horizontal rotation axis, arranged on a fixed support and provided with secondary rotors secured on the generator shafts, and having a diameter less than that of the main rotor. The generators of this windpower turbine generator are arranged preferably at the end sections of the main rotor blades symmetrically in relation to their rotation axis. The main rotor drives secondary rotors through the air at much higher speed than the wind speed, what allows using high-speed generators without step-up gears.

The main object of creating such a windpower turbine generator is the achievement of highest rotary speed of the secondary rotors for use of high-speed, lightweight and inexpensive generators without set-up gears. That is why the secondary rotors are located at the end sections of the blades, preferably at the very ends of the blades where linear speed of their passing through air is maximal. However, it is reasonable for windpower turbine generators of not so high capacity (from 3 up to 100 kW), whose diameter of the main rotor is less than 20 m. For windpower turbine generators of high capacity with a diameter of the main rotor more than 20 m, loads on the blades are rapidly increased because of the increase in centrifugal forces acting on the generators and the secondary rotors which are located far from the rotation axis. Increase in the thickness of load-bearing elements of the rotor blades for increasing their strength leads to an increase in their own weight and correspondingly to a secondary increase of centrifugal forces. In addition, the arranging of secondary rotors at the end sections of the blades essentially reduces overall efficiency as a result of non-optimal conditions of the air flow over the blades.

Thus, high-speed generators are used in this windpower turbine generator, but the disadvantages mentioned above cause an increase in weight of the rotor blades and their hub, as well as other units of this windpower turbine generator, which leads to an increase in the cost of the windpower turbine generator and the price of the energy produced with its help, and also to a decrease in its reliability.

The prior art closest to the claimed device as to its technical specification and obtained effect is a windpower turbine generator in accordance with UA patent 75359 C2 (MIK [006] F03D 1/00, publication of 04/06/17/). It comprises a rotatable head with a main rotor, whose axis of rotation is located essentially horizontally, the rotatable head being arranged on a fixed support, a power converter formed by main rotor generators, spaced along the blades with their cable network, and also secondary rotors that are kinematically connected with respective generators. In this windpower turbine generator blades are hingedly installed on the hub of the rotatable head, the generators are placed at a distance from 0.4 up to 0.8 of the blade length from the axis of rotation of the rotor, and the secondary rotors are placed on generator shafts. While operation of the windpower turbine generator its starting, maintaining rotor rotary speed, and stopping are performed due to rotation of the main rotor blades around their longitudinal axes.

The main object of such a windpower turbine generator lies in a decrease in windpower turbine generator cost and price of the electric power generated by it by means of the arrangement of generators and secondary wheels in a zone where secondary rotors have high a overall efficiency and the centrifugal forces having an effect on the generators are relatively not so high, so that there is no need to increase the strength of the blades.

The disadvantages of this windpower turbine generator are its large size, great weight and high cost of the blade hinges which are located on the hub of the rotatable head of the main rotor, and of drives for their rotation, and the increase in size, weight and cost of the rotor hubs, which prevents a reduction in the cost of the windpower turbine generator. This is caused by presence of generators on hinged blades installed on the rotor hub, and by the effects of high centrifugal forces and bending moments on these hinges, which in turn cause high frictional forces and a need for powerful devices for rotation of the blades.

The object of the present invention is the improvement of the known windpower turbine generator by means of changes in construction of the main rotor, which provides a reduction of the load on its units and of their weight, which increases its reliability and provides a decrease in windpower plant cost, and also by means of an optimal arrangement of its secondary rotors for the purpose of increasing the overall efficiency of the windpower turbine generator.

The object is attained in that in accordance with the invention, in the known windpower turbine generator, comprising a rotatable head on a fixed support and having a main rotor, whose axis of rotation is located substantially horizontally, a power converter in the form of generators spaced along the main rotor blades with their cable network, and also secondary rotors, which are kinematically connected with corresponding generators, the blades of the main rotor are equipped with end sections, each of which is designed with the possibility of rotation around its longitudinal axis, that generators are located at the end sections of the fixed parts of the blades, and secondary rotors are located towards air flow at a distance of from 0.25 to 0.35 of the main rotor diameter from its axis of rotation, and with the location of their axes of rotation in relation to the plane perpendicular to the main rotor axis of rotation at an angle of

$$\gamma = (0.7 \div 1.0)\ \text{arctg}\ \frac{V_{nom}}{\omega \times L}\ \text{degrees,}$$

wherein $V_{nom}$ - nominal speed of wind flow;

      L - distance from the main rotor axis of rotation to the secondary rotor axis of rotation ;

      $\omega$ - rotary speed of the main rotor at a nominal speed of the wind flow.

Preferably the end sections of the main rotor blades are hingedly arranged on the generator bodies and are equipped with devices for their rotation.

Equipping of the main rotor blades with the end sections made it possible for each to rotate around its longitudinal axis, the arrangement of the generators at the end sections of fixed parts of the blades permits the prevention of the necessity of the rotation of the generators around longitudinal axes of the blades, and correspondingly to omit hinges between the main wheel hub and its blades. This allows the application of small, light and cheap hinges, and also of devices for rotating the blade end sections, with such advantages due to the load effect on them from the side of the blade end sections only, which increases reliability of the windpower turbine generator. Such a solution reduces the size and weight of the main rotor hub, which leads to a reduction in its cost. The stationary fixing of the blades of the main rotor on its hub results in a permanent effect of the rotation moment thereon, both during their rotation and when stopped. Therefore, movable blade end sections should be long enough so as to be able to reliably stop the rotor in case of necessity, and at the same time should be minimal for decreasing the load on the hinges. The arrangement of the secondary rotor at a distance from 0.25 to 0.35 of the main rotor from its axis of rotation correspondingly determines the length of the blade end sections from 0.15 to 0.25 of the main rotor diameter, which is sufficient for the reliable stoppage of the rotor even in case of failure of one or several devices for the rotation of the blade end sections. Said length of the blade end sections simultaneously provides the smallest loading on the hinges and the devices for rotation of the end parts, which also increases the reliability of the windpower turbine generator.

Thus, an increase in reliability is achieved due to both decreasing the loading on the hinges used in the rotor and providing rotor stoppage even in case of failure of one or several devices for rotation of the blades. The place of the secondary rotors arrangement is selected depending on the number of rotor blades and the amount of allowable functional failures of the devices for rotation of the blade end sections. An arrangement of secondary rotors towards air flow and with location of their axes of rotation in relation to the plane perpendicular to the main rotor rotation axis of at an angle of

$$\gamma = (0.7 \div 1.0)\ \text{arctg}\ \frac{V_{nom}}{\omega \times L}\ \text{degrees,}$$

allows the provision of the highest overall efficiency of the secondary rotors arranged on the fixed blade sections.

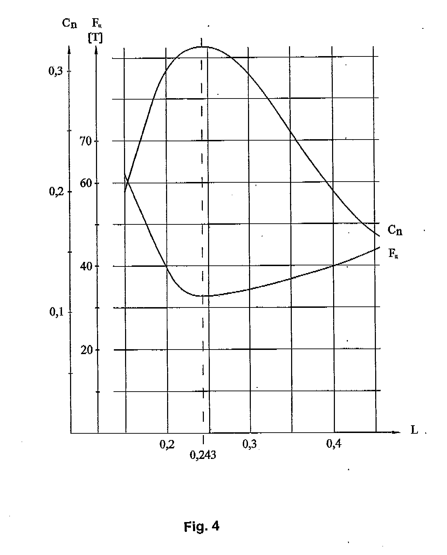

Arrangement of the end sections of the main rotor blades on the generator bodies in a hinged manner, and equipping them with rotation devices, together with the arrangement of the generators at the end of fixed blade sections allows using generator bodies as parts of blade longerons of decreasing longeron weight and cost, and also allows the allocation of generator rotor axes of rotation along the blades, kinematically connecting them with secondary rotors by a transmission made of two conical gear wheels. Placing generators along the blades results in considerably increased strength of their stator bodies, which allows decreasing their weight, simultaneously providing the necessary rigidity. In addition, said distance range for placing secondary rotors from 0.25 to 0.35 of the main rotor diameter, which is determined by providing reliable operation of the windpower turbine generator, and on which the length of the main rotor blade end section depends, coincides with a range which the secondary rotors have the most overall efficiency, caused by the coefficient $C_n$ of wind stream power transformation (table 1 and Fig. 4), and generators placed in this range act on the blade with the smallest force (Fig. 4) in any embodiment of the windpower turbine generator.

Table 1 presents a dependence of values of wind stream power transformation coefficient $C_n$ and centrifugal force $F_c$ affecting the generators, on a relative location L of their location, and the location of the secondary rotors, and also other parameters related thereto for a 750 kW windpower turbine generator. In Fig. 4 the correspondent curves of the basic parameters of this windpower turbine generator indicated in the Table 1, are represented:

Table 1

| | | Parameter, dimension | Parameter value | | |
|---|---|---|---|---|---|
| 1 | | L - relative distance from the axis of a main rotor to the location of a generator and a secondary rotor (in relation to a main rotor diameter) | 0.2 | 0.243 | 0.4 |
| 2 | | R - radius of location of generators and secondary rotors, [meters] | 10.81 | 13.1 | 21.6 |
| 4 | | $n_x$ - relative overload, [free fall acceleration units] $n_x = R*\omega^2$ | 12 | 14.2 | 23.85 |
| 5 | | $m_{gen}$ - generator weight, [kg] | 338 | 234.7 | 168 |
| 6 | | $F_c$ - centrifugal force, [kg] $F_c = m_{gen}* n_x = m_{gen}* R*\omega^2$ | 39800 | 32751 | 39422 |
| 7 | | V - linear speed of secondary rotors , [m/s] $V = R*\omega$ | 35.6 | 43.2 | 71.2 |
| 8 | | $C_n$ - power transformation coefficient of secondary rotor | 0.3 | 0.32 | 0.2 |

The technical essence of the invention is explained by graphic figures and description of its principle of operation.

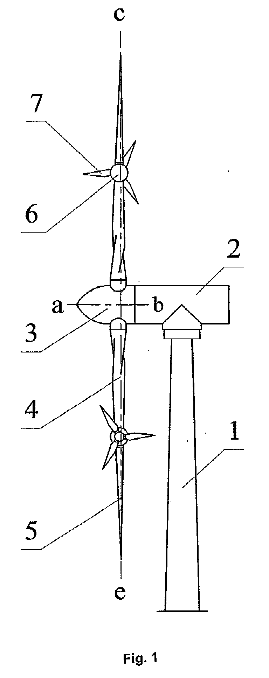

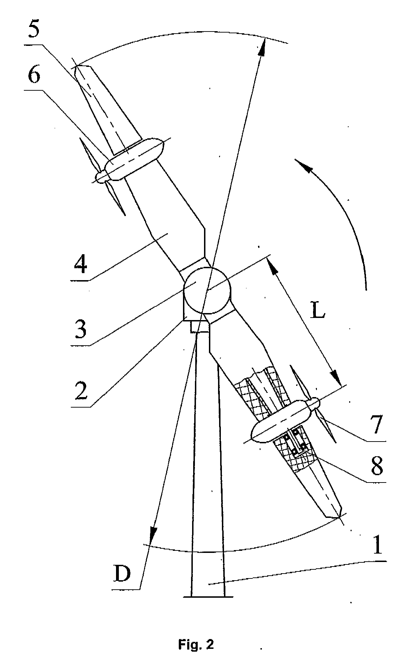

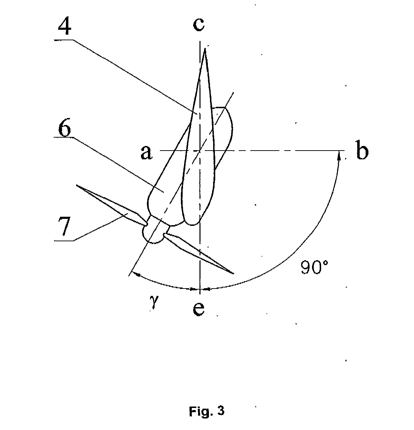

In Figs. 1 and 2, a general view of a windpower turbine generator is presented. In Fig. 3, a part of the main rotor blade with a generator having a secondary rotor arranged thereon is presented. In Fig. 4, curves of dependence of relative cost coefficient and other parameters on the location of a generator and secondary rotors allocation are presented.

A windpower turbine generator comprises, arranged on a fixed support 1 (Fig. 1), a rotatable head 2 with a main rotor 3, whose axis of rotation a,b is located horizontally, and blades 4 are equipped with rotatable end sections 5, power converters in the form of generators 6, secondary rotors 7 located at a distance L (Fig. 2) from 0.25 to 0.35 of the main rotor diameter D from its axis of rotation c - e (Fig. 3) with the location of their axes of rotation in relation to the plane perpendicular to the main rotor axis of rotation a - b at an angle

$$\gamma = (0.7 \div 1.0) \; \text{arctg} \; \frac{V_{nom}}{\omega \times L} \; \text{degrees,}$$

wherein $V_{nom}$ - wind flow nominal speed;

    L - distance from the main rotor axis of rotation a - b to the secondary axis of rotation;

    $\omega$ - rotary speed of the main rotor ar nominal speed of the wind flow, the end parts 5 (Fig. 2) of the blades of the main rotor 3 being arranged on the generator bodies with the help of hinge units 8.

In Fig. 2 the generators 6 are located in such a way that the axes of rotation their rotors are perpendicular to the longitudinal axes of the blades 4. It is also possible for the axes of rotation of the rotors to be in alignment with longitudinal axes of the blades 4 (not shown in the Figs.). In this case the generator is connected with the secondary rotor 7 via a transmission in the form of two cone gear wheels which can have reduction ratios from 5 to 7, which makes possible usage of generators of higher speed than those shown in Fig. 2. The blades 4 are fixed to the hub of the main rotor 3.

The claimed device operates in the following way. Under wind action, the blades of the main rotor 3 (Figs. 1 and 2) are rotating together with generators 6 fixed thereon by fixed parts 4, on which shafts secondary rotors 7 are secured. Due to the circular motion of the secondary rotors 7, they are affected by summary air flow, which consists of wind speed and circular motion speed of the secondary rotors, and thus is much higher than the wind speed, providing for the secondary rotors rotary speeds sufficient for usage of high-speed generators 6 without step-up gearings.

The rotatable head 2 is oriented to the wind all the time at any wind direction.

When the wind speed varies, the drives turn end sections 5 (Fig. 2) and maintain the necessary rotary speed of the main rotor 3, the hinges 8 being acted on by centrifugal forces and binding moments only from the end sections 5, which have a minimal but sufficient length for reliable rotor 3 operation and stoppage and correspondingly minimal weight because of the location of the generators 6 and the secondary rotors 7 at a distance L from 0.25 up to 0.35 of D (depending on specific design of the windpower turbine generator) from the axis of rotation of the main rotor 3 a - b (Fig. 1). For the purpose of reliable stoppage of a rotor having three blades, provided that failure of two devices for rotation of the blades end section is allowed and the rotor weight is minimal, secondary rotors should be placed at a distance of 0.25 of the main rotor diameter from its axis of rotation, and for rotors having two blades, provided that both devices for rotation of the blades end sections operate reliably, at a distance of 0.35 of the main rotor diameter.

Location of the axes of rotation of the secondary rotors 7 in relation to the plane perpendicular to the main rotor 3 at an angle

$$\gamma = (0.7 \div 1.0) \, \text{arctg} \, \frac{V_{nom}}{\omega \times L} \, \text{degrees,}$$

provides for their high overall efficiency in spite of the fact that the blades parts 4 on which are located are stationarily fixed on the hub.

To stop the windpower turbine generator, the drives turn the blades 5 (Fig. 2) to the position in which they create a rotation moment sufficient for counteracting the moment of rotation of the fixed blade elements.

So the windpower turbine generator claimed meets all the criteria of invention, such as "novelty", "inventional steps" and "industrial applicability".

**Claims**

1. A windpower turbine generator comprising a rotatable head installed on a fixed support and having a main rotor, whose axis of rotation is located essentially horizontally, a power converter made in the form of generators spaced along the main rotor blades with their cable network, and also secondary rotors, that are kinematically connected with respective generators, **characterized in that** the blades of the main rotor are equipped with end sections, each designed with the possibility of rotating around its longitudinal axis, generators are located at the end sections of the fixed parts of the blades, and secondary rotors are located towards the air stream at a distance of from 0.25 to 0.35 of the main rotor diameter from its axis of rotation and with the location of their axes of rotation in relation to the plane perpendicular to the main rotor axis of rotation at an angle,

$$\gamma = (0.7 \div 1.0) \, \text{arctg} \, \frac{V_{nom}}{\omega \times L} \, \text{degrees,}$$

wherein $V_{nom}$ - nominal speed of wind flow;

L - distance from axis of rotation of the main rotor to the secondary rotor rotation axis;

$\omega$ - the rotary speed of the main rotor at a nominal speed of wind.

2. The windpower turbine generator of claim 1,
**characterized in that** the end sections of the main rotor blades are hingedly arranged on the generator bodies and equipped with devices for their rotation.

Fig. 1

Fig. 2

Fig. 3

**Fig. 4**

## INTERNATIONAL SEARCH REPORT

| International application No. |
|---|
| PCT/RU 2006/000051 |

**A.   CLASSIFICATION OF SUBJECT MATTER**

F03D 1/02 (2006.01)

According to International Patent Classification (IPC) or to both national classification and IPC

**B.   FIELDS SEARCHED**

Minimum documentation searched (classification system followed by classification symbols)

F03D 1/00-1/06, 3/00-3/06, 5/00-5/06, 7/00-7/06, 11/00-11/04

Documentation searched other than minimum documentation to the extent that such documents are included in the fields searched

Electronic data base consulted during the international search (name of data base and, where practicable, search terms used)

RUPAT, USPTO DB, Esp@cenet,

**C.   DOCUMENTS CONSIDERED TO BE RELEVANT**

| Category* | Citation of document, with indication, where appropriate, of the relevant passages | Relevant to claim No. |
|---|---|---|
| A | UA  75359 C2 (OBSCHESTVO S OGRANICHENNOI OTVETSTVENNOSTIJU PROEKTNO-KONSTRUKTORSKOE-TEKHNOLOGICHESKOE  BJURO "KONKORD") 15.04.2006 | 1-2 |
| A | RU  2066396 C1 (TOVARISCHESTVO S OGRANICHENNOI OTVETSTVENNOSTIJU FIRMA "OBSCHEMASH-INZHINIRING" et al.) 10.09.1996 | 1-2 |
| A | RU  2065991 C1 (TOVARISCHESTVO S OGRANICHENNOI OTVETSTVENNOSTIJU FIRMA "OBSCHEMASH-INZHINIRING" et al.) 27.08.1996 | 1-2 |
| A | SU  1776868 A1 (A.P. SOLOVIEV) 23.11.1992 | 1-2 |
| A | SU  1817819 A3 (V.A. VIKTORUK) 23.05.1993 | 1-2 |
| A | US  5151610 A (JEAN ST-GERMAIN) 29.09.1992 | 1-2 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 March 2007 | 15 March 2007 |

| Name and mailing address of the ISA/ | Authorized officer |
|---|---|
| RU | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- UA 9400023 W
- WO 9521326 A
- US P5151610 A
- US F03D100 A
- UA 75359 C2